Europäisches Patentamt

**European Patent Office**

**Office européen des brevets**

(11) Veröffentlichungsnummer : **0 075 124**
**B1**

(12) **EUROPÄISCHE PATENTSCHRIFT**

(45) Veröffentlichungstag der Patentschrift :
**02.01.86**

(21) Anmeldenummer : **82107782.3**

(22) Anmeldetag : **25.08.82**

(51) Int. Cl.⁴ : **B 01 J 35/04**, B 01 J 37/02,
B 01 J 23/56, B 01 D 53/36

(54) Katalysator für die Verbrennung von in Abgasen alkoholbetriebener Verbrennungskraftmaschinen enthaltenen Schadstoffen, Verfahren zur Herstellung des Katalysators und Verwendung.

(30) Priorität : **18.09.81 DE 3137169**

(43) Veröffentlichungstag der Anmeldung :
**30.03.83 Patentblatt 83/13**

(45) Bekanntmachung des Hinweises auf die Patenterteilung : **02.01.86 Patentblatt 86/01**

(84) Benannte Vertragsstaaten :
**DE FR GB IT**

(56) Entgegenhaltungen :
FR-A- 2 385 665
GB-A- 2 005 149
GB-A- 2 036 585
GB-A- 2 079 174

(73) Patentinhaber : **Degussa Aktiengesellschaft
Weissfrauenstrasse 9
D-6000 Frankfurt am Main 1 (DE)**

(72) Erfinder : **Domesle, Rainer, Dr.
Wingertstrasse 202
D-6457 Maintal (DE)**
Erfinder : **Koberstein, Edgar, Dr.
Wolfskernstrasse 8
D-8755 Alzenau (DE)**
Erfinder : **Pletka, Hans-Dieter, Dr.
Im Schwalbengrund 20
D-6463 Freigericht 1 (DE)**
Erfinder : **Völker, Herbert
Bogenstrasse 43
D-6450 Hanau 11 (DE)**

Jouve, 18, rue St-Denis, 75001 Paris, France

EP 0 075 124 B1

0 075 124

**Beschreibung**

Die Erfindung betrifft einen Katalysator für die Verbrennung von in Abgasen alkoholbetriebener Verbrennungskraftmaschinen enthaltenen Schadstoffen, insbesondere von Aldehyden, ein Verfahren zur Herstellung dieses Katalysators und seine Verwendung.

Im Zeichen einer weltweiten Energieverknappung werden in zunehmendem Maße außer Kraftstoffen aus Erdöldestillaten auch andere Energieträger für den Betrieb von Verbrennungskraftmaschinen verwendet. So wird z. B. in manchen Ländern bereits Methanol, hergestellt durch die Vergasung von Kohle, oder Ethanol, erhalten durch Vergärung von Biomasse und nachfolgende Destillation, mit Erfolg eingesetzt.

Ist eine Teilzumischung von Alkoholen zu Kraftstoffen für Verbrennungskraftmaschinen bis zu einer Konzentration von 15 Vol.% bereits durchaus üblich, so ist die Umstellung auf reine Alkoholmotoren, welche z. B. nur mit Ethanol oder Methanol betrieben werden, erst in einigen Ländern im Anfangsstadium vollzogen, da die technischen Einrichtungen für eine Alkoholgewinnung im großen Maßstab erst geschaffen werden müssen.

In den Abgasen von mit Benzin betriebenen Verbrennungskraftmaschinen kommen Aldehyde vor. Mit Alkohol betriebene Verbrennungskraftmaschinen emittieren aber mengenmäßig ein Vielfaches an Aldehyden. Hohe Aldehyd-Konzentrationen in der Umgebungsluft führen aber nicht nur zu Geruchsbelästigungen und zur Reizung der Schleimhäute, sondern es kann darüber hinaus — in Anwesenheit oder Abwesenheit von Stickoxiden — eine Fotooxidation der Aldehyde stattfinden, wobei phytotoxische Stoffe gebildet werden.

So entsteht z. B. aus Acetaldehyd, Sauerstoff und Stickstoffpentoxid ($N_2O_5$) sogenanntes PAN (Peroxiacetylnitrat, $CH_3CO_2ONO_2$), eine Verbindung, auf die die Wirkung des Los Angeles Smogs hauptsächlich zurückgeht.

Während für die Beseitigung der Schadstoffe Kohlenmonoxid, Kohlenwasserstoffe und Stickoxide eine bereits erprobte Technologie existiert, ist über eine wirksame Kontrolle der Aldehyde in den Abgasen von mit Alkohol betriebenen Motoren wenig bekannt.

So wurde gefunden, daß insbesondere Nichtedelmetallkatalysatoren, wie z. B. Katalysatoren auf Basis von Kupfer-Chromoxid, bei ihrer Anwendung im Abgasstrom eines mit Alkohol betriebenen Motors den Anteil der Aldehyde eher erhöhen als verringern.

Es lassen sich zwar bekannte Systeme von Oxidationskatalysatoren auf Basis von Platin Palladium bzw. Platin/Rhodium auf Keramikträgern zur Reinigung von Aldehyd enthaltenden Abgasen verwenden, jedoch ist das Ergebnis meist unbefriedigend, da diese Katalysatorsysteme für die höheren Abgastemperaturen Verbrennungskraftmaschinen konzipiert sind, welche mit Kraftstoffen aus Erdöldestillaten betrieben werden.

Bei Alkoholmotoren sind jedoch aufgrund des wesentlich geringeren Energieinhaltes ihres Betriebsmittels und der erwünschten mageren Betriebsweise die Abgastemperaturen wesentlich niedriger. Die führt bei Einsatz herkömmlicher Katalysatorsysteme, welche auf keramischen Wabenkörpern bzw. Schüttgutträgern abgeschieden sind, zu Schwierigkeiten, da diese Systeme aufgrund ihres relativ beträchtlichen Raumbedarfs nicht genügend motornah, d. h. in Zonen, in denen das Abgas noch ausreichend heiß ist, angebracht werden können.

Aus der GB-A 2 005 149 und GB-A 2 036 585 sind Katalysatoren bekannt, bestehend aus einer durchgehende Kanäle entlang einer Hauptachse aufweisenden Matrix aus glatten und gewellten Lagen aus hochtemperaturfestem und zunderbeständigen Stahl, bzw. einem Stahl mit entsprechend widerstandsfähiger Oberfläche, welche abwechselnd angeordnet und zu einem Paket geschichtet oder spiralig zu einem Wickelkörper aufgerollt sind, einem darauf befindlichen Überzug aus Aluminiumoxid der Übergangsreihe und auf dem Überzug abgeschiedenen Edelmetallen. Diese Katalysatoren sind zur Reinigung von Abgasen aus Verbrennungskraftmaschinen geeignet.

Es wurde nun überraschenderweise gefunden, daß Palladium in Verbindung mit einem Aluminiumoxid der Übergangsreihe, welches gegebenenfalls mit Erdalkalimetalloxid(en) und/oder Oxiden der Elemente der Lanthanidengruppe gitterstabilisiert ist, bei der Konvertierung von im Abgas alkoholbetriebener Verbrennungsmotoren enthaltenen Aldehyden, Alkoholen und anderen Verunreinigungen gute Ergbnisse liefert, wenn diese Katalysatorbestandteile auf einem metallischen strukturellen Verstärker in Form einer gasdurchströmbaren, temperatur- und korrosionsbeständigen Matrix aufgebracht sind.

Gegenstand der Erfindung ist demgemäß ein Katalysator für die Verbrennung von in Abgasen alkoholbetriebener Verbrennungskraftmaschinen enthaltenen Schadstoffen. Der Katalysator besteht aus einer durchgehende Kanäle entlang einer Hauptachse aufweisenden Matrix aus glatten und gewellten Lagen aus hochtemperaturfestem und zunderbeständigen Stahl bzw. einem Stahl mit entsprechend widerstandsfähiger Oberfläche, welche abwechselnd angeordnet und zu einem Paket geschichtet oder spiralig zu einem Wickelkörper aufgerollt sind, einem darauf befindichen Überzug aus gegebenenfalls 0,5-20 Gew.% eines oder mehrere Erdalkalimetalle und/oder Seltene Erdmetalle in Oxidform enthaltendem Aluminiumoxid der Übergangsreihe und auf dem Überzug abgeschiedenem Palladium in Mengen von 0,03-3 Gew.%, bezogen auf das Gasamtgewicht von Überzug und Palladium.

Unter Aluminiumoxid der Übergangsreihe ist aktives, d. h. katalyseförderndes Aluminiumoxid zu

2

verstehen, welches die folgenden kristallographisch bestimmbaren Phasen enthalten kann ; γ, η, δ, ϑ bzw. ʃ, x und χ-Aluminiumoxid.

Nach einer bevorzugten Ausführungsform der Erfindung ist des Aluminiumoxid der Übergangsreihe mit Calcium-, Strontium, Barium oder Ceroxid und/oder mit Kombinationen La-Nd, La-Nd-Ce oder La-Nd-Pr-Ce, jeweils als Mischung der einzelnen Elementoxide, gitterstabilisiert.

Die Metallmatrix kann aus abwechselnd aufeinander angeordneten gewellten und glatten hochtemperaturfesten, korrosionsbeständigen und zunderfesten Stahlblechen gefertigt sein. Sie kann auch aus abwechselnd aufeinander angeordneten glatten und gewellten Lagen aus entsprechend unempfindlichem Stahl bestehen, wobei eine Lage aus gewelltem Blech mit einer Lage aus glattem Siebgewebe, oder eine Lage aus glattem Blech mit einer Lage aus gewelltem Siebgewebe, oder eine Lage aus gewelltem Siebgewebe mit einer Lage aus glattem Siebgewebe abwechselt. Anstelle des Siebgewebes können auch perforierte Bleche eingesetzt werden.

Die Lagen der Metallmatrix können zu einem Paket geschichtet oder zu einer zylindrischen, ovalen, rechteckigen oder mehreckigen Spirale aufgewickelt sein. Die gewellte Lage kann verschieden geformt sein. Günstig ist, wenn sie Sinusform oder die Form einer Evolvente oder eine rechteckige oder quadratische oder trapezartige Form aufweist.

Die Effektivität des Katalysators hängt in einem erheblichen Ausmaß von der Zelldichte (Kanaldichte) der Matrix ab. Für den vorgesehenen Zweck hat es sich als günstig erwiesen, wenn die Matrix eine Zelldichte von 62 bis 124 Zellen/cm² hat.

Als Metall kommen für die Matrix Legierungen mit den Hauptbestandteilen Eisen, Chrom, Aluminium und gegebenenfalls noch Cer oder Yttrium in Frage, wobei das Material zur Schaffung einer verankerungsgünstigen Oberfläche in einem sauerstoffhaltigen Gas unter Bedingungen von Temperatur und Zeit erhitzt wird, unter denen sich aus dem in der Legierung enthaltenen Aluminium eine Oberflächenschicht aus Aluminiumoxid ausbildet. Eine vorzugsweise Ausführungsform der Erfindung sieht also vor, daß die Matrix aus einem eine Deckhaut von festhaftendem Aluminiumoxid aufweisenden, Aluminium enthaltenden ferritischen Chromsthal besteht.

Das Metall für die Matrix kann aber auch ein einfacher Kohlenstoffstahl oder einfaches Gußeisen sein, welches mit einer Aluminium-Eisen-Diffusionsschicht, erhalten durch Tempern von aluminiumbeschichtetem Stahl oder Eisen bei hohen Temperaturen überzogen ist. Demgemäß sieht eine wegen ihrer niedrigen Kosten besonders bevorzugte Variante der Erfindung vor, daß die Matrix aus einem mit einer Al-Fe-Diffusionsschicht überzogenen Kohlenstoffstahl besteht.

Gegenstand der Erfindung ist auch ein Verfahren zur Herstellung des beschriebenen Katalysators. Es besteht darin, daß man die Metallmatrix mit einer Dispersion des aktiven Aluminiumoxids in Berührung bringt, den erzeugten Aluminiumoxidüberzug trocknet, ihn an Luft 30-180 Min. bei 600-900, vorzugsweise 700 °C, tempert und dann mit einer Palladiumsalz enthaltenden wäßrigen Lösung imprägniert, anschließend erneut trocknet und den Katalysator schließlich durch Erhitzen auf Temperaturen von 250-650, vorzugsweise 400-500 °C, in oxidierender oder reduzierender Atmosphäre bzw. im Strom des zu reinigenden Abgases aktiviert bzw. formiert.

Wenn eine aus Aluminium enthaltenden ferritischen Chromstahl bestehende Matrix verwendet wird, wird sie zur Erzeugung einer haftungsverbessernden rauhen Oberflächenoxidschicht vor dem Aufbringen des aktiven Aluminiumoxids 1-4 Stunden an Luft bei 800-1 100 °C getempert. Diese Temperbehandlung kann auch schon auf die Ausgangsbestandteile der Matrix angewandt werden.

Wenn eine aus kostengünstigeren Kohlenstoffstahl bestehende Matrix verwendet werden soll, so beschichtet man diese, z. B. in einem Schmelzbad mit Aluminium und setzt dieses Verbundmaterial mindestens 1 Min. einer Temperatur im Bereich von 600-1 200 °C aus. Normalerweise werden Erhitzungsdauern zwischen 5 und 12 Minuten angewandt. Es entsteht dabei eine hochtemperaturbeständige, korrosionsfeste und zunderfeste Oberflächenschicht aus im wesentlichen aluminiumoxidfreier, aluminiumreicher Aluminiumeisenlegierung, welche stark zerklüftet und damit haftgünstig ist. Die Erzeugung der Aluminium-Eisen-Diffusionschicht kann auch schon auf den Ausgangsbestandteilen der Matrix, d. h. vor deren Montage, erfolgen.

Nach einer weiteren Ausgestaltung des erfindungsgemäßen Verfahrens kann die Daueraktivität des Katalysators erheblich verbessert werden, wenn das Aluminiumoxid der Übergangsreihe gitterstabilisiert wird. Die Erfindung sieht hierfür vor, daß das aktive Aluminiumoxid vor dem Aufbringen auf die Matrix mit einem Salz oder Oxid eines oder mehrere Erdalkalimetalle und/oder Seltener Erdmetalle vermischt und dann 0,5 bis 3 Stunden bei 600-1 100 °C erhitzt wird; im wesentlichen werden dabei Elementoxide bzw. Elementoxidkombinationen eingesetzt, welche im Anspruch 2 aufgeführt sind.

Die Erfindung erstreckt sich schließlich auch auf die Verwendung des vorstehend stofflich und herstellungsmäßig beschriebenen Katalysators zur gleichzeitigen Beseitigung von Aldehyden, Alkoholen, wie Ethanol und Methanol, Kohlenmonoxid und Kohlenwasserstoffen aus den Abgasen von Verbrennungskraftmaschinen, welche mit Alkoholen, wie Methanol und Ethanol als Kraftstoff betrieben werden.

Der erfindungsgemäße Katalysator liefert eine Reihe überraschender Vorteile. So liefert die Verwendung von Palladium als aktive Komponente eine überraschenderweise niedrigere Anspringtemperatur für die katalytische Reaktion bzw. höhere Umsatzwerte bei niedrigeren Temperaturen als herkömmliche Oxidationskatalysatoren auf Platin/Palladium-bzw. Platin/Rhodium-Basis.

3

# 0 075 124

Dieser Vorteil wird verstärkt durch die Verwendung der Metallmatrizen als strukturelle Verstärker für das Katalysatorsystem. Die geringere Wärmekapazität des Metalls gegenüber einer Keramik erlaubt ein schnelleres Aufheizen des Katalysators und damit ein rascheres Erreichen der Betriebstemperatur. Strukturelle Verstärker auf keramischer Basis, wie aus Cordierit oder Mullit, weisen mit steigender Zelldichte abnehmende Festigkeit auf, d. h. daß sie relativ groß bemessen werden müssen.

Demgegenüber lassen die Wandstärken der in den Metallmatrizen verwendeten Metallbänder oder Siebgewebe eine Fertigung wesentlich höherer Zelldichten zu. Dies erlaubt eine sehr kompakte Bauweise des Gasreinigungssystems und damit eine motornahe Anbringung unter optimaler Verwertung der vorhandenen Abgaswärme. Dies ist speziell beim Betreiben eines Motors mit Alkoholkraftstoff wichtig, weil hier die Abgastemperaturen naturgemäß niedriger liegen. Mit den vorgestellten Katalysatoren erreicht man also ein schnelles Anspringen der Konversionsreaktion und eine erhöhte Umsatzrate der Schadstoffe bei einem gegebenen Temperaturprofil in der Abgasleitung. Diese Eigenschaften sind besonders wichtig, weil im kalten Betriebszustand eines Motors die meisten Schadstoffe emittiert werden und ein schnelles Einsetzen der katalytischen Reaktion die Gesamtemission vermindert.

Die Erfindung wird nachfolgend anhand von Ausführungsbeispielen näher erläutert :

## Beispiel 1

Ein Stahlband von 7,62 mm Breite und 0,05 mm Stärke aus einem aluminiumhaltigen Chromstahl (15 % Cr, 5 % Al, Rest Fe) wird durch mechanische Verformung trapezförmig gewellt und zusammen mit einem glatten Band derart spiralförmig aufgewickelt, daß ein zylindrischer struktureller Verstärker von 76,2 mm Länge und 25,4 mm Durchmesser mit einer Zelldichte von 62 Zellen/cm$^2$ an den Stirnflächen entsteht.

Der so hergestellte strukturelle Verstärker wird dann entfettet und zur mechanischen Verfestigung an den Stirnflächen im Hochvakuum verlötet. Zur Herstellung einer verankerungsgünstigen Oberfläche wird der so gefertigte strukturelle Verstärker für 3 Stunden bei einer Temperatur von 950 °C getempert.

## Beispiel 2 (Vergleichsbeispiel)

Ein nach Beispiel 1 hergestellter struktureller Verstärker wird in eine 30 %ige $\gamma$-Al$_2$O$_3$-Suspension getaucht, überschüssige Suspension in den Kanälen durch Ausblasen entfernt und das Substrat bei 250 °C getrocknet. Dieser Vorgang wird wiederholt und anschließend wird der Katalysatorträger zur Verfestigung der Al$_2$O$_3$-Schicht 2 Stunden bei 700 °C getempert. Auf dem strukturellen Verstärker befinden sich nun 14 g Al$_2$O$_3$ der Übergangsreihe mit einer spezifischen Oberfläche von ca. 120 m$^2$/g.

Auf den so vorbereiteten Katalysatorträger werden durch Tauchen in eine 3 Gew.-% Edelmetall enthaltende wäßrige Lösung von H$_2$PtCl$_6$ und PdCl$_2$ insgesamt 0,04 g Platin/Palladium im Verhältnis 5 : 2 aufgebracht. Die überschüssige Lösung wird mit Luft ausgeblasen und der Katalysator bei 250 °C getrocknet und danach 1,5 Stunden im Wasserstoffstrom bei 500 °C reduziert.

## Beispiel 3

Ein nach Beispiel 1 hergestellter struktureller Verstärker wird mit einem Lanthan- und Neodymoxid im Gewichtsverhältnis 70/30 enthaltenden Überzug aus $\gamma$-Al$_2$O$_3$ versehen. Dies erfolgt durch Tauchen in eine 30 Gew.-% $\gamma$-Al$_2$O$_3$ enthaltende wäßrige Suspension, welche zusätzlich eine Mischung der Nitrate der beiden Seltenen Erdmetalle im angegebenen Verhältnis, entsprechend insgesamt 0,7 Gew-% Lanthanplus Neodymoxid, enthält.

Die überschüssige Suspension in den Kanälen wird nach dem Tauchen durch Ausblasen mit Luft entfernt und der gecoatete Verstärker bei 250 °C getrocknet. Dieser Vorgang wird wiederholt und anschließend wird der Katalysatorträger zur Verfestigung des Al$_2$O$_3$-Überzugs 2 Stunden bei 700 °C getempert. Auf dem strukturellen Verstärker befinden sich nun 14 g mit La/Nd-Oxiden dotiertes Al$_2$O$_3$ der Übergangsreihe mit einer spezifischen Oberfläche von ca. 120 m$^2$/g.

Auf den so vorbereiteten Katalysatorträger werden durch Tauchen in eine 4,7 Gew.%ige wäßrige Lösung von PdCl$_2$ insgesamt 0,04 g Pd aufgebracht. Die überschüssige Lösung wird mit Luft ausgeblasen und der Katalysator bei 250 °C getrocknet und danach 1,5 Stunden im Wasserstoffstrom bei 400 °C reduziert.

## Beispiel 4

Ein nach Beispiel 1 hergestellter struktureller Verstärker wird in eine 30 %ige $\gamma$-Al$_2$O$_3$-Suspension getaucht. Die überschüssige Suspension in den Kanälen wird nach dem Tauchen durch Ausblasen mit Luft entfernt und der gecoatete Verstärker bei 250 °C getrocknet. Dieser Vorgang wird wiederholt und anschließend wird der Katalysatorträger zur Verfestigung des $\gamma$-Al$_2$O$_3$-Überzugs 2 Stunden bei 700 °C getempert. Auf dem strukturellen Verstärker befinden sich nun 14 g Aluminiumoxid der Übergangsreihe mit eine spezifischen Oberfläche von ca. 120 m$^2$/g.

Auf den so vorbereiteten Katalysatorträger werden durch Tauchen in eine 6,5 Gew.%ige wäßrige

4

Lösung von Palladiumnitrat insgesamt 0,04 g Palladium aufgebracht. Die überschüssige Lösung wird mit Luft ausgeblasen und der Katalysator bei 250 °C getrocknet und danach 30 Min. in einem 500 °C heißen Luftstrom aktiviert.

Beispiel 5

Die nach Beispiel 2, 3 und 4 hergestellten Katalysatoren wurden über 100 Stunden am Motor mit unverbleitem Benzin gealtert und anschließend einem Aktivitätstest mit zwei verschiedenen, Aldehyde enthaltenden Gasgemischen unterworfen (Raumgeschwindigkeit 50 000 $h^{-1}$).

Gas a)

70.25 Vol.% $N_2$
10 Vol.% $CO_2$
15 Vol.% $H_2O$
3.5 Vol.% $O_2$ (Überschuß 0.375 Vol.%)
0.75 Vol.% $C_2H_5OH$
0.25 Vol.% HCHO
0.25 Vol.% $CH_3CHO$

Gas b)

67.87 Vol.% $N_2$
10 Vol.% $CO_2$
15 Vol.% $H_2O$
4.5 Vol.% $O_2$ (Überschuß 0.485 Vol.%)
0.75 Vol.% $C_2H_5OH$
0.25 Vol.% HCHO
0.25 Vol.% $CH_3CHO$
1.33 Vol.% $CO/H_2 = 3/1$
0.05 Vol.% $C_3H_6$

Die Bestimmung der Umsätze wurden für CO mit einem Infrarotspektrometer, für HC mit einem Flammenionisationsdetektor (FID) und für Ethanol, Formaldehyd und Acetaldehyd gaschromatographisch durchgeführt. Die Ergebnisse sind in Tabelle 1 für Gasgemisch (a) und in Tabelle 2 für Gasgemisch (b) und die Anspringtemperaturen in Tabelle 3 enthalten.

Tabelle 1

a) 350 °C

| Kat. n. Beisp. | % Umsatz | | |
|---|---|---|---|
| | $C_2H_5OH$ | HCHO | $CH_3HO$ |
| 2 | 93 | 55 | 89 |
| 3 | 94 | 83 | 93 |
| 4 | 95 | 88 | 96 |

b) 400 °C

| | | | |
|---|---|---|---|
| 2 | 96 | 77 | 92 |
| 3 | 99 | 96 | 96 |
| 4 | 99 | 98 | 98 |

# 0 075 124

Tabelle 2

a) 350 °C

| Kat. n. Beisp. | % Umsatz | | | | |
|---|---|---|---|---|---|
| | $C_2H_5OH$ | HCHO | $CH_3CHO$ | CO | $C_3H_6$ |
| 2 | 96 | 62 | 91 | 100 | 94 |
| 3 | 98 | 89 | 98 | 100 | 96 |
| 4 | 98 | 90 | 100 | 100 | 96 |

b) 400 °C

| 2 | 98 | 81 | 95 | 100 | 100 |
|---|---|---|---|---|---|
| 3 | 100 | 96 | 100 | 100 | 100 |
| 4 | 99 | 99 | 100 | 100 | 100 |

Tabelle 3

| Kat. n. Beisp. | Anspringtemperatur °C | |
|---|---|---|
| | Gas a) | Gas b) |
| 2 | 320 | 320 |
| 3 | 305 | 315 |
| 4 | 300 | 300 |

Wie die Testergebnisse des Beispiels 5 zeigen, sind die erfindungsgemäßen Katalysatoren nach den Beispielen 3 und 4 sowohl im Anspringverhalten als auch in der Konvertierung den herkömmlichen Katalysatoren nach Beispeil 2 überlegen. Die Schadstoffe werden in weit höherem Maße abgebaut als durch den Vergleichskatalysator. Aber auch bei der Umwandlung von Acetaldehyd in die unschädlichen Bestandteile $CO_2$ und Wasserdampf lassen sich zwischen den erfindungsgemäß hergestellten Katalysatoren und dem Katalysator, hergestellt nach Beispiel 2, noch deutliche Unterschiede erkennen.

Beispiel 6 (Vergleichsbeispiel)

Ein Katalysator mit einem Edelmetallgehalt von 1,52 g/l und den Edelmetallen Pt/Rh im Verhältnis 11 : 1 wird nach dem Verfahren des Beispiels 2 hergestellt. Zur Gitterstabilisierung wurde der $\gamma$-$Al_2O_3$-Suspension Ce(III)- und Zr(IV)-nitrat, entsprechend 8 g $CeO_2$ und 10 g $ZrO_2$ pro Liter Trägervolumen beigemengt.

Beispiel 7 (Vergleichsbeispiel)

Ein Katalysator mit einem Edelmetallgehalt von 1,41 g/l und den Edelmetallen Pt/Pd im Verhältnis 2 : 1, wird nach dem Verfahren des Beispiels 2 hergestellt. Zur Gitterstabilisierung wurde der $\gamma$-$Al_2O_3$-Suspension Ce(III)-nitrat, entsprechend 8 g $CeO_2$ pro Liter Trägervolumen beigemengt.

6

Beispiel 8

Ein Katalysator mit einem Edelmetallgehalt von 1,06 g/l wird nach dem Verfahren des Beispiels 3 hergestellt. Zur Gitterstabilisierung wurde der $Al_2O_3$-Suspension Ce(III)-nitrat, entsprechend 8 g $CeO_2$ pro Liter Trägervolumen beigemengt.

Beispiel 9

Die nach Beispiel 6, 7 und 8 hergestellten Katalysatoren wurden frisch und gealtert mit den Gaszusammensetzungen des Beispiels 5 bezüglich ihres Anspringverhaltens vermessen. Die Alterung erfolgte 4 Stunden bei 850 °C in Luft. Die Ergebnisse sind in Tabelle 4 enthalten.

Tabelle 4

a) frisch

| Kat. n. Beisp. | Anspringtemperatur $^\circ$ C | |
|---|---|---|
| | Gas a) | Gas b) |
| 6 | 195 | 192 |
| 7 | 190 | 191 |
| 8 | 215 | 219 |

b) gealtert

| Kat. n. Beisp. | Anspringtemperatur $^\circ$ C | |
|---|---|---|
| | Gas a) | Gas b) |
| 6 | 265 | 270 |
| 7 | 260 | 272 |
| 8 | 210 | 219 |

Selbst mit wesentlich geringerem Edelmetallgehalt zeigt der erfindungsgemäße Katalysator nach Alterung ein wesentlich besseres Anspringverhalten als die Vergleichskatalysatoren. Es ist praktisch keine Verschlechterung in der Anspringtemperatur eingetreten.

**Patentansprüche**

1. Katalysator für die Verbrennung von in Abgasen alkoholbetriebener Verbrennungskraftmaschinen enthaltenen Schadstoffen, bestehend aus einer durchgehende Kanäle entlang einer Hauptachse aufweisenden Matrix aus glatten und gewellten Lagen aus hochtemperaturfestem und zunderbeständigen Stahl, bzw. einem Stahl mit entsprechend widerstandsfähiger Oberfläche, welche abwechselnd angeordnet und zu einem Paket geschichtet oder spiralig zu einem Wickelkörper aufgerollt sind, einem darauf befindlichen Überzug aus gegebenenfalls 0,5-20 Gew.% eines oder mehrere Erdalkalimetalle und/oder Seltene Erdmetalle in Oxidform enthaltendem Aluminiumoxid der Übergangsreihe und auf dem Überzug abgeschiedenem Palladium in Mengen von 0,03-3 Gew.%, bezogen auf das Gesamtgewicht von Überzug und Palladium.

2. Katalysator nach Anspruch 1, dadurch gekennzeichnet, daß das Aluminiumoxid der Übergangsreihe mit Calcium-, Strontium-, Barium- oder Ceroxid und/oder mit Kombinationen La-Nd, La-Nd-Ce oder La-Nd-Pr-Ce, jeweils als Mischung der einzelnen Elementoxide, gitterstabilisiert ist.

3. Katalysator nach Anspruch 1 oder 2, dadurch gekennzeichnet, daß die Matrix eine Kanaldichte von 62 bis 124 Zellen/$cm^2$ hat.

4. Katalysator nach den Ansprüchen 1-3, dadurch gekennzeichnet, daß die glatten und/oder die gewellten Lagen aus perforierten Blechen oder Siebgewebe bestehen.

5. Katalysator nach den Ansprüchen 1-4, dadurch gekennzeichnet, daß die Matrix aus einem eine Deckhaut von festhaftendem Aluminiumoxid aufweisenden, Aluminium enthaltenden ferritischen Chromstahl besteht.

6. Katalysator nach den Ansprüchen 1-4, dadurch gekennzeichnet, daß die Matrix aus einem mit eine Al-Fe-Diffusionsschicht überzogenen Kohlenstoffsthal besteht.

7. Verfahren zur Herstellung des Katalysators nach den Ansprüchen 1-6, dadurch gekennzeichnet, daß man die Metallmatrix mit einer Dispersion des aktiven Aluminiumoxids in Berührung bringt, den erzeugten Aluminiumoxidüberzug trocknet, ihn an Luft 30-180 Min. bei 600-900, vorzugsweise 700 °C, tempert und dann mit einer Palladiumsalz enthaltenden wäßrigen Lösung imprägniert, anschließend erneut trocknet und den Katalysator schließlich durch Erhitzen auf Temperaturen von 250-650, vorzugsweise 400-500 °C, in oxidierender oder reduzierender Atmosphäre bzw. im Strom des zu reinigenden Abgases aktiviert bzw. formiert.

8. Verfahren nach Anspruch 7, dadurch gekennzeichnet, daß eine aus Aluminium enthaltenden ferritischen Chromstahl bestehende Matrix vor dem Aufbringen des aktiven Aluminiumoxids 1-4 Stunden an Luft bei 800-1 100 °C getempert wird.

9. Verfahren nach Anspruch 7, dadurch gekennzeichnet, daß eine aus Kohlenstoffstahl bestehende Matrix vor dem Aufbringen des aktiven Aluminiumoxids mit Aluminium beschichtet und dieses Verbundmaterial mindestens 1 Min. einer Temperatur im Bereich von 600-1 200 °C ausgesetzt wird.

10. Verfahren nach den Ansprüchen 7-9, dadurch gekennzeichnet, daß das Aluminiumoxid der Übergangsreihe vor dem Aufbringen auf die Matrix mit einem Salz oder Oxid eines oder mehrerer Erdalkalimetalle und/oder Seltener Erdmetalle vermischt und dann 0,5-3 Stunden bei 600-1 100 °C erhitzt wird.

11. Verwendung des Katalysators nach vorstehenden Ansprüchen zur gleichzeitigen Beseitigung von Aldehyden, Alkoholen, Kohlenmonoxid und Kohlenwasserstoffen aus den Abgasen von Verbrennungskraftmaschinen, welche mit Alkoholen als Kraftstoff betrieben werden.

**Claims**

1. A catalyst for the combustion of harmful substances contained in waste gases of alcohol-operated combustion engines, consisting of a matrix having continuous channels along a main axis and made up of smooth and corrugated layers of high temperature-resistant and non-scaling steel or a steel having a correspondingly resistant surface, which are arranged alternately and are rolled up into a layered packet or a spiralled roll package a coating provided thereon consisting of aluminium oxide of the transition series, optionally containing from 0.5 to 20 %, by weight of one or more alkaline earth metals and/or rare metals in oxide form and palladium deposited on the coating in quantities of from 0.03 to 3 %, by weight, based on the total weight of the coating and palladium.

2. A catalyst according to claim 1, characterised in that the aluminium oxide of the transition series is lattice-stabilized with calcium, strontium, barium or cerium oxide and/or with the combinations La-Nd, La-Nd-Ce or La-Nd-Pr-Ce, in each case as a mixture of the oxides of the individual elements.

3. A catalyst according to claim 1 or 2, characterised in that the matrix has a channel density of from 62 to 124 cells/cm$^2$.

4. A catalyst according to claims 1 to 3, characterised in that the smooth and/or corrugated layers consist of perforated sheets or screen cloth.

5. A catalyst according to claims 1 to 4, characterised in that the matrix consists of an aluminium-containing ferritic chromium steel having a covering of adherent aluminium oxide.

6. A catalyst according to claims 1 to 4, characterised in that the matrix consists of a carbon steel coated with an Al-Fe diffusion layer.

7. A process for the production of the catalyst according to claims 1 to 6, characterised in that the metal matrix is brought into contact with a dispersion of the active aluminium oxide, the resulting aluminium oxide coating is dried, annealed in air for from 30 to 180 min at from 600 to 900, preferably 700 °C and then impregnated with a palladium salt-containing aqueous solution, then dried again and the catalyst is finally activated or formed by heating to temperatures of from 250 to 650, preferably from 400 to 500 °C, in an oxidizing or reducing atmosphere or in a flow of the waste gas to be purified.

8. A process according to claim 7, characterised in that a matrix consisting of aluminium-containing ferritic chromium steel is annealed for from 1 to 4 hours in air at from 800 to 1 100 °C before the active aluminium oxide is applied.

9. A process according to claim 7, characterised in that a matrix consisting of carbon steel is coated with aluminium before applying the active aluminium oxide, and this composite material is subjected for at least 1 min to a temperature in the range of from 600 to 1 200 °C.

10. A process according to claims 7 to 9, characterised in that the aluminium oxide of the transition series is mixed with a salt or oxide of one or more alkaline earth metals and/or rare earth metals before applying to the matrix and then heated for from 0.5 to 3 hours at from 600 to 1 100 °C.

11. The use of the catalyst according to preceding claims for the simultaneous removal of aldehydes, alcohols, carbon monoxide and hydrocarbons from the waste gases of alcohol-fuelled combustion engines.

**Revendications**

1. Catalyseur pour la combustion des substances nocives contenues dans les gaz d'échappement des moteurs à combustion interne fonctionnant à l'alcool, constitué d'une matrice, comportant des canaux qui la traversent le long d'un axe principal, faite de lits lisses et ondulés d'acier résistant aux hautes températures et à l'oxydation à chaud, ou d'un acier possédant des surfaces de résistance appropriée, ces lits étant posés alternativement et étant empilés en un paquet ou enroulés en spirale à un élément en coin, et un revêtement, qui se trouve sur les canaux, en oxyde d'aluminium de la série de transition contenant éventuellement 0,5 à 20 % en poids d'un ou plusieurs métaux alcalino-terreux et/ou métaux des terres rares sous la forme d'oxydes, pendant qu'il est déposé, sur le revêtement, du palladium, dans la proportion de 0,03 à 3 % en poids calculé sur le poids total du revêtement et du palladium.

2. Catalyseur suivant la revendication 1, caractérisé en ce que l'oxyde d'aluminium de la série de transition est stabilisé dans son réseau avec un oxyde de calcium, strontium, baryum ou cérium, et/ou avec des combinaisons de La-Nd, La-Nd-Ce, ou La-Nd-Pr-Ce, toujours sous forme de mélanges des oxydes des différents éléments.

3. Catalyseur suivant l'une des revendications 1 ou 2, caractérisé en ce que la matrice présente une densité des canaux de 62 à 124 cellules/cm$^2$.

4. Catalyseur suivant les revendications 1 à 3, caractérisé en ce que les lits lisses et/ou ondulés sont constitués par des tôles perforées ou des toiles métalliques de tamisage.

5. Catalyseur suivant les revendications 1 à 4, caractérisé en ce que la matrice est constituée d'un acier au chrome ferritique contenant de l'aluminium, présentant une couche de recouvrement en oxyde d'aluminium adhérant fortement.

6. Catalyseur suivant les revendications 1 à 4, caractérisé en ce que la matrice est constituée d'acier au carbone recouvert d'une couche d'Al-Fe obtenue par diffusion.

7. Procédé pour la fabrication du catalyseur suivant les revendications 1 à 6, caractérisé en ce que l'on met la matrice métallique en contact avec une dispersion d'un oxyde d'aluminium actif, sèche le revêtement d'oxyde d'aluminium produit, lui fait subir un traitement thermique à l'air pendant 30 à 180 min., à 600 à 900 ou mieux à 700 °C, et l'imprègne ensuite d'une solution aqueuse contenant un sel de palladium, le sèche ensuite à nouveau, et active ou forme le catalyseur, finalement, par chauffage à des températures de 250 à 650, de préférence 400 à 500 °C, en atmosphère oxydante ou réductrice, ou dans le courant du gaz d'échappement à épurer.

8. Procédé suivant la revendication 1, caractérisé en ce que le matrice constituée d'acier au chrome ferritique contenant de l'aluminium subit un traitement thermique de 1 à 4 heures à 800 à 1 100 °C à l'air avant l'application de l'oxyde d'aluminium actif.

9. Procédé suivant la revendication 7, caractérisé en ce qu'une matrice constituée d'acier au carbone est revêtue d'aluminium avant l'application de l'oxyde d'aluminium actif, et que ce matériau composite est soumis pendant au moins une minute à une température de l'ordre de 600 à 1 200 °C.

10. Procédé suivant les revendications 7 à 9, caractérisé en ce que l'oxyde d'aluminium de la série de transition est mélangé, avant d'être appliqué sur la matrice avec un sel ou un oxyde d'un ou plusieurs métaux alcalino-terreux ou métaux des terres rares, et est ensuite chauffé pendant 0,3 à 5 heures à 600 à 1 100 °C.

11. Utilisation du catalyseur suivant les revendications précédentes, pour l'élimination simultanée des aldéhydes, alcools monoxyde de carbone et hydrocarbures des gaz d'échappement des moteurs à combustion interne qui fonctionnent avec des alcools comme carburants.